# EUROPÄISCHE PATENTANMELDUNG

(11) **EP 4 092 335 A1**
(43) Veröffentlichungstag der Anmeldung: **23.11.2022**
(21) Anmeldenummer: 22173514.5
(22) Anmeldetag: 16.05.2022
(51) Int. Cl.: F24D 19/00

(54) **ZUSATZVORRICHTUNG FÜR TEMPERIERSYSTEM UND TEMPERIERSYSTEM MIT DESINFEKTIONSEINHEIT**

(30) Priorität: 21.05.2021 AT 504062021
(71) Anmelder: Olymp Werk GmbH, 6430 Ötztal-Bahnhof (AT)
(72) Erfinder: SCHWARZ, Anton, 6410 Telfs (AT)
(74) Vertreter: Torggler & Hofmann Patentanwälte - Innsbruck

(57) **Zusammenfassung**

Zusatzvorrichtung (29) für ein Temperiersystem (1) umfassend mindestens eine Anschlussöffnung (43) zum Anschließen der Zusatzvorrichtung (29) an ein ein flüssiges Wärmetransportmittel (4) umwälzendes Umlaufsystem (3) des Temperiersystems (1), sodass das Wärmetransportmittel (4) durch die mindestens eine Anschlussöffnung (43) in die und aus der Zusatzvorrichtung (29) strömen kann, wobei in der Zusatzvorrichtung (29) mindestens eine Desinfektionseinheit (8) vorgesehen ist, wobei die Desinfektionseinheit (8) mindestens zwei Elektroden (16a, 16b) aufweist, welche mit dem Wärmetransportmittel (4) in Kontakt bringbar sind, und wobei die mindestens zwei Elektroden (16a, 16b) an eine elektrische Spannungsquelle (9) anschließbar oder angeschlossen sind.

## Beschreibung

Die Erfindung betrifft eine Zusatzvorrichtung für ein Temperiersystem umfassend mindestens eine Anschlussöffnung zum Anschließen der Zusatzvorrichtung an ein ein flüssiges Wärmetransportmittel umwälzendes Umlaufsystem des Temperiersystems, sodass das Wärmetransportmittel durch die mindestens eine Anschlussöffnung in die und aus der Zusatzvorrichtung strömen kann.

Des Weiteren betrifft die Erfindung ein Temperiersystem, insbesondere Niedrigtemperaturheizsystem oder Kühlsystem, zum Temperieren eines zu temperierenden Mediums, umfassend mindestens ein geschlossenes Umlaufsystem, wobei sich im Umlaufsystem ein, zumindest teilweise flüssiges, Wärmetransportmittel, insbesondere Wasser, befindet, welches im mindestens einen Umlaufsystem mittels Umwälzpumpe zirkuliert, wobei das mindestens eine Umlaufsystem wenigstens eine erste Wärmeaustauschvorrichtung zum Temperieren des Wärmetransportmittels und wenigstens eine zweite Wärmeaustauschvorrichtung zum Temperieren eines zu temperierenden Mediums aufweist.

Zudem betrifft die Erfindung ein Verfahren zum Desinfizieren eines Wärmetransportmittels in einem Temperiersystem.

Zum Zwecke der Energieeinsparung ist es wünschenswert und üblich, Heizsysteme und ähnliche Anlagen mit immer niedrigeren Systemtemperaturen des Wärmetransportmittels, als welches beispielsweise Wasser verwendet werden kann, zu betreiben. Außerdem erfreuen sich Kühlsysteme oder kombinierte Heiz- und Kühlsysteme immer größerer Beliebtheit. Die niedrigen Temperaturen des Wärmetransportmittels in solchen Temperiersystemen bieten jedoch gute Bedingungen für die Ausbreitung von Bakterien, insbesondere, wenn die maximale Systemtemperatur im Umlaufsystem geringer als eine thermische Desinfektionstemperatur der Bakterien ist, ab welcher Bakterien abgetötet werden. In kühleren Bereichen können dabei unter Umständen sogar optimale Bruttemperaturen für Bakterien vorherrschen. Die Verwendung von Kunststoffrohren, welche ebenfalls unter anderem durch die niedrigen Systemtemperaturen oft verbaut werden, fördert zusätzlich die Vermehrung von koloniebildenden Bakterien.

Bakterien, deren Ausscheidungsprodukte und/oder deren Absterbeprodukte sind häufig die Ursache für Korrosion an nahezu allen gängigen, verwendeten Werkstoffen, mit welchen das Wärmetransportmittel in Kontakt kommt. Es ist daher wünschenswert, das Wärmetransportmittel zu desinfizieren um Bakterien abzutöten.

Die Patentschrift AT 409 033 B betrifft ein Heizsystem zur Beheizung von Gebäuden mit einem Brauchwasserspeicher und einem offenen Umlaufsystem mit Warmwasserentnahmestellen und einer Heizeinrichtung, welches über einen Wärmetauscher mit dem offenen Umlaufsystem in Verbindung steht. Der Brauchwasserspeicher wird mittels Solarenergie erhitzt. Im Brauchwasserspeicher ist eine Opferanode vorgesehen, wobei die Verwendung der Opferanode nur zum Korrosionsschutz des Brauchwasserspeichers dient und als Nebeneffekt auch die Verbreitung von Bakterien unterbindet, was auf die geringen Ströme von Behälterwand zu Opferelektrode durch das Brauchwasser zurückgeführt wird.

Nachteilig an diesem Stand der Technik ist, dass die auf elektrochemischen Weg entstehenden, passiven elektrischen Ströme nicht steuerbar und vom Korrosionsgrad der Opferanode abhängig sind. Außerdem wirkt die Opferanode nur lokal im Speicher, jedoch nicht für das angeschlossene Rohrnetz des Umlaufsystems.

Die Aufgabe der vorliegenden Erfindung ist es, eine Zusatzvorrichtung für ein Temperiersystem, ein Temperiersystem und ein Verfahren zum Desinfizieren eines Wärmetransportmittels in einem Temperiersystem zu schaffen, welches die Nachteile aus dem Stand der Technik zumindest teilweise vermeidet. Insbesondere soll die Bildung von Bakterien im Wärmetransportmittel des Temperiersystems unterbunden oder verringert wird.

Dies wird gelöst durch die Merkmale der Ansprüche 1, 9 und 15.

Erfindungsgemäß ist in der Zusatzvorrichtung mindestens eine Desinfektionseinheit vorgesehen, wobei die Desinfektionseinheit mindestens zwei Elektroden aufweist, welche mit dem Wärmetransportmittel in Kontakt bringbar sind, und wobei die mindestens zwei Elektroden an eine elektrische Spannungsquelle anschließbar oder angeschlossen sind.

Im Einbauzustand der Zusatzvorrichtung im Umlaufsystem einer Temperiervorrichtung entsteht damit ein elektrisches Feld im Wärmetransportmittel, wodurch ein von im Wärmetransportmittel gelösten Ionen getragener elektrischer Strom durch das Wärmetransportmittel fließt. Es wird also ein Leitungsvorgang im Wärmetransportmittel hervorgerufen. Durch die Bewegung der Ionen wird ein verändertes chemisches Milieu im Wärmetransportmittel geschaffen, welches desinfizierend auf das Wärmetransportmittel wirkt. Dadurch, dass bei Temperiersystemen mit einem geschlossenen Umlaufsystem immer dasselbe Wasser im Umlauf ist, erhöht sich effektiv die Wirkzeit, in welcher sich ein bestimmtes Volumen des Heizmediums im Wirkbereich, also im Bereich, in welchem im Betrieb elektrischer Strom fließt, befindet. Daher kann die Desinfektion des Wärmetransportmittels mit wesentlich geringeren Stromstärken durchgeführt werden, womit eine geringere Spannung an die Elektroden angelegt werden kann. Dadurch wird in weiterer Folge der Verschleiß der Elektroden verringert, womit ein wartungsintensiver Austausch der Elektroden vermieden wird oder weniger oft durchgeführt werden muss. Durch die geringeren Stromstärken wird ebenfalls eine Elektrolyse des Wärmetransportmittels gering gehalten oder vermieden.

Gemäß einem weiteren Aspekt der Erfindung ist im Umlaufsystem des Temperiersystems mindestens eine Desinfektionseinheit vorgesehen. Die Wirkweise der Desinfektionseinheit ist wie im vorigen Absatz beschrieben.

Ein erfindungsgemäßes Verfahren zum Desinfizieren eines Wärmetransportmittels in einem Temperiersystem weist die folgenden Verfahrensschritte auf: Es wird zuerst die Umwälzpumpe des Temperiersystems in Betrieb genommen, sodass das Wärmetransportmittel im mindestens einen Umlaufsystem zirkuliert. Dann wird eine elektrische Spannung zwischen den mindestens zwei Elektroden angelegt, sodass ein elektrischer Strom durch das zirkulierende, die Elektroden umströmende, Wärmetransportmittel fließt.

Es sei angemerkt, dass das Verfahren zum Desinfizieren eines Wärmetransportmittels ohne das Einbringen von chemischen Zusätzen in das Wärmetransportmittel funktioniert. Damit muss keine spezielle stoffliche Dosierung vorgenommen werden. Des Weiteren sind chemische Zusätze zum Desinfizieren oft gesundheitsschädlich. Eine Vermeidung der Verwendung der chemischen Zusätze ist daher vorteilhaft.

Versuche des Anmelders haben gezeigt, dass durch die Anwendung des Verfahrens zum Desinfizieren eines Wärmetransportmittels die Bakterienkonzentration von mehr als 30000 Koloniebildendenden Einheiten (KBE) auf 0 Koloniebildende Einheiten (KBE) reduziert werden konnte.

Mindestens eine erste Elektrode ist als Anode ausgebildet und mit dem Pluspol der elektrischen Spannungsquelle verbunden. Mindestens eine zweite Anode ist als Kathode ausgebildet und mit dem Minuspol der elektrischen Spannungsquelle verbunden. Damit entsteht ein elektrisches Feld zwischen der Anode und der Kathode, wenn eine elektrische Spannung angelegt ist.

Das Umlaufsystem des Temperiersystems ist geschlossen, insbesondere sind keine Entnahmestellen für Brauchwasser vorgesehen.

Als Wärmetransportmittel ist üblicherweise Wasser vorgesehen. Ebenso können Mischungen aus Wasser und Zusatzstoffen, wie Glykol zur Senkung des Gefrierpunkts, verwendet werden. Natürlich ist Wasser in Temperiersystemen nicht rein, es weist dagegen eine natürliche Menge an gelösten Ionen auf.

Die mindestens zwei Elektroden können, zumindest abschnittsweise, eine gemeinsame Längsrichtung aufweisen und mit einem Abstand parallel zueinander angeordnet sein. Dabei sind die mindestens zwei Elektroden vorzugweise als gerade Stäbe ausgebildet sind. Damit entsteht ein im Wesentlichen konstantes und ebenes elektrisches Feld zwischen den mindestens zwei Elektroden.

Sind die mindestens zwei Elektroden in einem rohrförmigen Abschnitt angeordnet, wobei die Längsrichtung in Richtung der Längsrichtung des rohrförmigen Abschnitts, insbesondere in Strömungsrichtung des Wärmetransportmittels, verläuft, befindet sich ein bestimmtes Volumen des Wärmetransportmittels länger im Wirkbereich zwischen den Elektroden. Damit wird die Wirkzeit erhöht wird.

Auch können die mindestens zwei Elektroden jeweils helixförmig ausgebildet sein und zusammen als Doppelhelix mit Abstand voneinander angeordnet sein. Damit kann ein großer Wirkbereich mit abwechselnder Anordnung von Anode und Kathode geschaffen werden. Weiters kann damit ein elektrisches Feld in Form eines Zylinders geschaffen werden.

In einem weiteren Ausführungsbeispiel kann mindestens eine Elektrode gitterförmig ausgebildet sein. Vorzugsweise kann dabei die mindestens eine weitere Elektrode mit einem Abstand zur mindestens einen Elektrode angeordnet sein. Damit kann die Fläche der Elektroden und die Größe des Wirkbereichs vergrößert werden, während das Wärmetransportmittel durch die Elektrode strömen kann.

In einem Ausführungsbeispiel sind die mindestens zwei Elektroden einen minimalen und/oder mittleren Abstand von 0,1 bis 50 Zentimeter, vorzugsweise 1 bis 20 Zentimeter, voneinander entfernt angeordnet. Die mindestens zwei Elektroden können eine Länge von 0,1 bis 200 Zentimeter, vorzugsweise 5 bis 20 Zentimeter, aufweisen. Weiterhin können die Elektroden eine, vorzugsweise aufeinander zugerichtete, Fläche von 0,01 Quadratzentimeter bis 2 Quadratmeter aufweisen. Die Größe des Wirkbereichs entspricht daher in etwa der aufeinander zugerichteten Fläche mal dem Abstand der Elektroden.

Die von der elektrischen Spannungsquelle bereitgestellte elektrische Spannung kann in einem Bereich von 0,01 bis 48 Volt, vorzugsweise 1 bis 24 Volt, liegen. Spannungen über 48 Volt sind im Bereich der Temperiersystemen vielerorts aus Sicherheitsgründen gesetzlich nicht erlaubt.

Es sei angemerkt, dass sich der durch das Wärmetransportmittel fließende elektrische Strom in Abhängigkeit des Leitwerts des Wärmetransportmittels, des Abstands der Elektroden und der angelegten elektrischen Spannung einstellt.

Um eine gute Wirkung der Desinfektionseinheit zu erzielen, darf die elektrische Stromstärke nicht zu hoch und nicht zu niedrig sein. Ist die elektrische Stromstärke zu hoch, kann eine Gasbildung durch Elektrolyse stattfinden und die Elektroden verschleißen unnötig schnell. Ist die elektrische Stromstärke zur niedrig, tritt keine Desinfektionswirkung ein.

Es kann vorgesehen sein, dass der durch das Wärmetransportmittel fließende elektrische Strom eine elektrische Stromstärke in einem Bereich von 0,0001 bis 1 Ampere, vorzugsweise in einem Bereich von 0,001 bis 0,1 Ampere, aufweist.

Versuche des Anmelders haben gezeigt, dass die Desinfektionseinheit mit elektrischen Stromstärken bei rund 0,01 Ampere eine besonders gute Wirkung erzielt.

Als aussagekräftiger kontrollierbarer Parameter hat sich das Verhältnis der von der elektrischen Spannungsquelle zur Verfügung gestellten elektrischen Spannung zum Abstand der mindestens zwei Elektroden herausgestellt. Es beträgt in einem Ausführungsbeispiel 0,1 bis 10 Volt pro Zentimeter, vorzugsweise 0,5 bis 2 Volt pro Zentimeter. Bei konstantem Abstand der Elektroden entspricht diese Größe im Wesentlichen der elektrischen Feldstärke des elektrischen Feldes zwischen den Elektroden.

Durch eine geringe elektrische Feldstärke (und der daraus resultierenden geringere elektrischen Stromstärke) findet keine (oder nur geringe) Elektrolyse des Wärmetransportmittels und keine (oder nur eine schwache) Gasbildung statt. Damit wird das unerwünschte Freisetzen von Oxidationsmittel im Umlaufsystem vermieden. Andererseits wird der Verschleiß der Elektroden geringgehalten. Damit ist ein wartungsintensiver Austausch der Elektroden nicht oder nur selten nötig.

Es kann vorgesehen sein, dass die mindestens zwei Elektroden durch eine Wandung der Zusatzvorrichtung oder des Umlaufsystems von außerhalb der Zusatzvorrichtung beziehungsweise des Umlaufsystems in das sich in der Zusatzvorrichtung beziehungsweise im Umlaufsystem befindliche Wärmetransportmittel jeweils durch eine Öffnung der Wandung ragen. Dabei können vorzugsweise die mindestens zwei Elektroden durch eine Isolierung von der Wandung elektrisch isoliert sind. Durch die Verwendung einer Isolierung können elektrische leitende Wandungen verwendet werden.

Insbesondere kann vorgesehen sein, dass eine erste Öffnung für eine erste Elektrode und eine zweite Öffnung für eine zweite Elektrode in einer Stirnseite eines rohrförmigen Abschnitts, vorzugsweise eines rohrförmigen Nebenabschnitts, angeordnet sind. Mit einer Stirnseite eines rohrförmigen Abschnitts ist eine Seite gemeint, dessen Flächennormale im Wesentlichen in die Richtung des rohrförmigen Abschnitts, also in Strömungsrichtung des Wärmetransportmittels, weist. Beispielsweise kommen solche Stirnseiten durch Rohrknicke oder Nebenabschnitte zustande.

Bevorzugt sind dabei die Elektroden als im Wesentlichen gerade Stäbe ausgebildet. Dadurch können die Elektroden leicht aus dem Heizmedium gezogen werden.

Die Elektroden können auch in einer Mantelseite eines rohrförmigen Abschnitts, vorzugsweise eines rohrförmigen Hauptabschnitts, angeordnet sein. Dabei ist besonders bevorzugt vorgesehen, dass die Elektroden als Stäbe mit einem Knick von im Wesentlichen 90° ausgebildet sind. Durch den Knick können die Elektroden in Richtung des rohrförmigen Abschnitts lang ausgedehnt sein, womit ein großer Wirkbereich entlang des rohrförmigen Abschnitts realisiert wird.

Es kann aber auch vorgesehen sein, dass eine leitende Wandung als Kathode oder Anode wirkt. In diesem Fall müsste nur eine weitere Elektrode von der Wandung isoliert im Umlaufsystem angeordnet werden.

In einem Ausführungsbeispiel der Zusatzvorrichtung sind mindestens zwei Anschlussöffnungen vorgesehen, wobei mindestens eine erste Anschlussöffnung als mindestens eine Einlassöffnung zum Einströmen des Wärmetransportmittels ausgebildet ist und mindestens eine weitere Anschlussöffnung als mindestens eine Auslassöffnung zum Ausströmen des Wärmetransportmittels ausgebildet ist. Damit kann die Zusatzvorrichtung, beispielsweise eine Filtereinheit oder ein Ausgleichsystem, an das Umlaufsystem so angeschlossen werden, dass eine starke Durchströmung mit dem Wärmetransportmittel erfolgt. Es kann vorgesehen sein, dass die Zusatzvorrichtung von der gesamten Durchflussmenge des Umlaufsystems durchflossen wird ("in Serie geschaltet") oder dass die Zusatzvorrichtung nur von einem Teil der Durchflussmenge des Umlaufsystems durchflossen wird ("parallel geschaltet").

Es kann also vorgesehen sein, dass bei jedem Umlauf im Wesentlichen die gesamte Umlaufmenge des Wärmetransportmittels die Elektroden umströmt werden oder dass bei jedem Umlauf des Wärmetransportmittels ein Teil der gesamten Umlaufmenge des Wärmetransportmittels die Elektroden umströmt werden.

Beispielsweise kann die Zusatzvorrichtung als Filtereinheit zum Filtern des Wärmetransportmittels ausgebildet sein, wobei im Strömungsweg des Wärmetransportmittels zwischen der mindestens einen Einlassöffnung und der mindestens einen Auslassöffnung ein, vorzugsweise als Sieb ausgebildeter, Filtereinsatz angeordnet ist. Dadurch können Partikel und Schlamm aus dem Wärmetransportmittel gefiltert werden. Vorzugsweise wird die Filtereinheit im Einbauzustand von der gesamten Durchflussmenge des Umlaufsystems durchflossen.

In einem Ausführungsbeispiel sind die mindestens zwei Elektroden, vorzugsweise mit einem konstanten Abstand zueinander, als Doppelhelix um den Filtereinsatz angeordnet. Besonders bevorzugt ist der Filtereinsatz korbförmig ausgebildet, wobei das Wärmetransportmittel im Einbauzustand der Zusatzvorrichtung im Umlaufsystem vom Äußeren ins Innere des korbförmigen Filtereinsatzes strömt. Ein im Wesentlichen korbförmiger Filtereinsatz kann von der Doppelhelix umgeben sein, womit ein zylinderförmiges elektrisches Feld den Filtereinsatz umgibt. Ein Großteil des Wärmetransportmittels muss daher durch den Wirkbereich, also durch das elektrische Feld, strömen, womit ein elektrischer Strom im Wärmetransportmittel hervorgerufen wird.

Es kann auch vorgesehen sein, dass die Zusatzvorrichtung als Ausgleichsystem mit einem, vorzugsweise unter Atmosphärendruck stehenden, Ausgleichbehälter ausgebildet ist, wobei die Desinfektionseinheit im Ausgleichbehälter angeordnet ist. Die durch die Änderung der Temperatur bedingte Volumenänderung des Wärmetransportmittels führt zu variierenden Drücken im Umlaufsystem. Dieser Druck kann durch ein Ausgleichsystem reguliert werden. Ein Teil der gesamten Durchflussmenge des Umlaufsystems wird daher regelmäßig in den Ausgleichbehälter geleitet oder vom Ausgleichbehälter ausgeleitet. Durch die Anordnung der Desinfektionseinheit im Ausgleichbehälter, wird zumindest der Ausgleichbehälter vor Korrosion durch Bakterien geschützt. Ausgeleitetes Wärmetransportmittel kann in der Folge auch andere Teile des Umlaufsystems desinfizieren.

Durch die Anordnung der Desinfektionseinheit in einem Ausgleichbehälter kann eine besonders energiesparende Variante der Desinfektion realisiert werden. Dadurch, dass das Wärmetransportmittel im Ausgleichsbehälter meistens ruht, kann die Desinfektion sehr effizient und mit nur geringen Strömen durchgeführt werden. Dadurch, dass das Wärmetransportmittel aus Ausgleichbehälter zum Teil auch regelmäßig in das Umlaufsystem abgeführt wird, wird auch das Umlaufsystem auf energiesparende Weise desinfiziert.

Insbesondere kann vorgesehen sein, dass im Betrieb 5 bis 20 Prozent des Inhalts des Ausgleichbehälters pro Tag mit dem Umlaufsystem ausgetauscht werden.

Es sei angemerkt, dass der Ausgleichsbehälter auch unter einem höheren oder niedrigeren Druck als Atmosphärendruck stehen kann.

In einem Ausführungsbeispiel weist das Ausgleichsystem ein schaltbares Ventil und eine Druckpumpe auf, wobei das schaltbare Ventil und die Druckpumpe von einer Steuereinheit steuerbar sind. Durch Schalten des schaltbaren Ventils ist die Verbindung vom Ausgleichssystem zum Umlaufsystem öffen- und schließbar. Es kann daher je nach Druck im Umlaufsystem das Ausgleichsystem zugeschalten werden. Um einen über dem Atmosphärendruck liegenden Druck im Umlaufsystem aufzubauen, ist eine Druckpumpe im Ausgleichsystem vorgesehen.

In einem Ausführungsbeispiel ist die Desinfektionseinheit in einem, vorzugsweise rohrförmigen, Hauptabschnitt des Umlaufsystems angeordnet. Dabei ist die Durchflussmenge des zirkulierenden Heizmediums durch den Hauptabschnitt vorzugsweise gleich der gesamten Durchflussmenge des zirkulierenden Wärmetransportmittels. Damit muss ein bestimmtes Volumen des zirkulierenden Wärmetransportmittels in jedem Zyklus einmal den Wirkbereich der Desinfektionseinheit durchfließen.

In einem alternativen Ausführungsbeispiel ist die Desinfektionseinheit in einem, vorzugsweise rohrförmigen, Nebenabschnitt des Umlaufsystems angeordnet, wobei der Nebenabschnitt mit einem, vorzugsweise rohrförmigen, Hauptabschnitt in Verbindung steht, sodass das Wärmetransportmittel vom Hauptabschnitt in den Nebenabschnitt fließen kann. Im Nebenabschnitt ist die Strömungsgeschwindigkeit typischerweise geringer als in einem Hauptabschnitt, wodurch die Wirkzeit, in welcher ein bestimmtes Volumen des Wärmetransportmittels von Strom durchflossen wird, vergrößert.

Bevorzugt ist dabei der Nebenabschnitt über wenigstens zwei Verbindungskanäle mit dem Hauptabschnitt verbunden, wobei wenigstens ein erster Verbindungskanal zum Einströmen vom Wärmetransportmittel in den Nebenabschnitt dient und wenigstens ein zweiter Verbindungskanal stromabwärts relativ zum wenigstens einen ersten Verbindungskanal angeordnet ist und zum Ausströmen vom Wärmetransportmittel aus dem Nebenabschnitt dient. Dadurch wird ein ausreichender Austausch des Wärmetransportmittels im Nebenabschnitt sichergestellt.

Es ist besonders bevorzugt vorgesehen, dass die Durchflussmenge des zirkulierenden Wärmetransportmittels durch den Nebenabschnitt kleiner als die Hälfte der gesamten Durchflussmenge des zirkulierenden Wärmetransportmittels ist. Das heißt, dass der Großteil des Wärmetransportmittels nicht durch den Nebenabschnitt fließt.

Die wenigstens eine erste Wärmeaustauschvorrichtung zum Temperieren des Wärmetransportmittels kann einen Brenner, vorzugsweise zur Verbrennung eines Heizmittels, beispielsweise von Gas, Öl, Brennholz, Briketts oder Pellets, und/oder einen Wärmetauscher aufweisen. Durch die Verbrennung des Heizmittels wird Wärme erzeugt, welche an das Wärmetransportmittel übertragen wird, womit das Wärmetransportmittel als Heizmedium fungieren kann. Durch einen Wärmetauscher kann Wärme aus einem zweiten Umlaufsystem, beispielsweise einer Wärmepumpe, aufgenommen werden oder Wärme an das zweite Umlaufsystem abgegeben werden.

Die wenigstens eine zweite Wärmeaustauschvorrichtung zum Temperieren eines zu temperierenden Bereichs kann ein, vorzugsweise mäanderförmiges, Rohrsystem, und/oder einen Heiz- oder Kühlkörper, und/oder einen Wärmetauscher aufweisen. Mit einem Rohrsystem oder einem Heiz- oder Kühlkörper kann Wärme beispielsweise an eine Wand oder die Luft abgegeben oder von einer Wand oder Luft aufgenommen werden. Auch kann ein Wärmetransportmittel eines zweiten Umlaufsystems mittels eines Wärmetauschers temperiert werden.

Das Wärmetransportmittel auf kann in einer Ausführung des Verfahrens auf eine maximale Systemtemperatur von 60 °C aufgeheizt werden. Damit kann das Heizsystem umwelt- und ressourcenschonend betrieben werden. Diese Temperatur ist unterhalb der thermischen Desinfektionstemperatur für Bakterien. Eine thermische Desinfektion ist aber durch die Verwendung der Desinfektionseinheit nicht mehr notwendig.

Weiterhin kann in einem Ausführungsbeispiel das Wärmetransportmittel auf eine minimale Systemtemperatur von -10°C abgekühlt werden. Dazu eignen sich beispielsweise Wärmetransportmittel aus Wasser und Glykol, welche einen niedrigen Gefrierpunkt aufweisen.

Es kann vorgesehen sein, dass die elektrische Spannung manuell und/oder periodisch und/oder aufgrund eines Messwerts des Heizmediums eines Messgeräts angeschaltet wird. Das Schalten der Spannung kann hierbei von einer Steuereinheit bewerkstellig werden. Als Messwert kann hier ein Messwert für die Bakterienkonzentration im Wärmetransportmittel zugezogen werden.

Weitere Ausführungen und Einzelheiten der Erfindung sind in den Figuren zu finden. Dabei zeigen:
- Fig. 1: eine schematische Darstellung eines Temperiersystems mit Desinfektionseinheit,
- Fig. 2: eine schematische Darstellung eines Temperiersystems zum Temperieren eines Gebäudes,
- Fig. 3a, b: Anordnung einer Desinfektionseinheit in einem rohrförmigen Abschnitt des Umlaufsystems a. im Hauptstrom und b. im Nebenstrom,
- Fig. 4a, b: Filter für ein Temperiersystem mit einer Desinfektionseinheit mit a. zwei geraden Elektroden und b. zwei als Doppelhelix angeordneten Elektroden, und
- Fig. 5: Ausgleichbehälter für ein Temperiersystem mit einer Desinfektionseinheit.

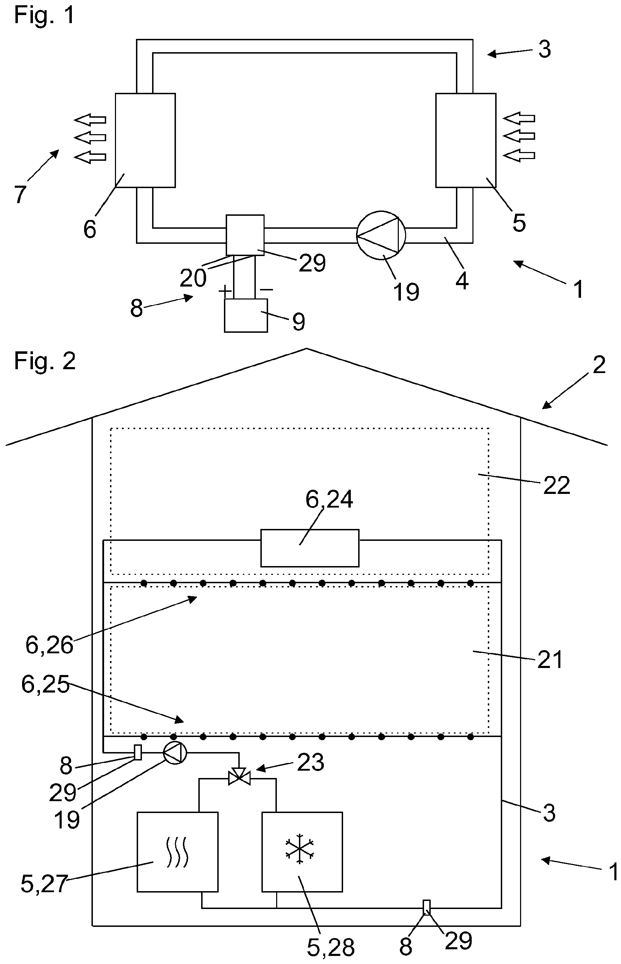

Die Fig. 1 zeigt eine schematische Darstellung eines Temperiersystems 1. Das Temperiersystem 1 umfasst ein geschlossenes Umlaufsystem 3, in welchem durch eine Umwälzpumpe 19 ein, zumindest teilweise flüssiges, Wärmetransportmittel 4 zirkuliert. Als Wärmetransportmittel 4 sind beispielsweise Wasser oder wässrige Lösungen geeignet.

Das Umlaufsystem 3 weist eine erste Wärmeaustauschvorrichtung 5 zum Temperieren des Wärmetransportmittels 4 und eine zweite Wärmeaustauschvorrichtung 6 zum Temperieren eines zu temperierenden Mediums 7 außerhalb des Umlaufsystems 3 auf. Das Umlaufsystem 3 besteht typischerweise zumindest teilweise aus einem Rohrsystem, wobei Metall- oder Kunststoffrohre zum Einsatz kommen können.

Ist das Temperiersystem 1 als Heizsystem ausgeführt oder wird es als solches betrieben, wird das Wärmetransportmittel 4 von der ersten Wärmeaustauschvorrichtung 5, beispielsweise einem Brenner oder einem Wärmetauscher, erwärmt. Das Wärmetransportmittel 4 wird über das Umlaufsystem 3 zur zweiten Wärmeaustauschvorrichtung 6, beispielsweise einem Heizkörper, transportiert, wobei dort Wärme an ein zu temperierendes Medium 7, beispielsweise die den Heizkörper umgebende Luft, abgegeben wird. Die Pfeile in der Fig. 1 stellen den Wärmetransport beim Betrieb als Heizsystem dar.

Bei einem Niedrigtemperaturheizsystem wird das Wärmetransportmittel 1 auf eine maximale Systemtemperatur von 60 °C aufgeheizt.

Ist das Temperiersystem 1 als Kühlsystem ausgeführt oder wird es als solches betrieben, wird das Wärmetransportmittel 4 von der ersten Wärmeaustauschvorrichtung 5, beispielsweise einem Wärmetauscher, gekühlt. Das Wärmetransportmittel 4 wird über das Umlaufsystem 3 zur zweiten Wärmeaustauschvorrichtung 6, beispielsweise einem Kühlkörper, transportiert, wobei dort Wärme aus einem zu temperierenden Medium 7, beispielsweise die den Kühlkörper umgebende Luft, aufgenommen wird.

Mit einem Kühlsystem kann das Wärmetransportmittel auf eine minimale Systemtemperatur von -10°C abgekühlt werden. Ist als Wärmetransportmittel Wasser vorgesehen, wird dieses hierzu vorzugsweise mit Glykol vermischt.

Ein als Wärmetauscher ausgeformte erste Wärmeaustauschvorrichtung 5 kann beispielsweise Wärme an eine Kältemaschine 28, vorzugsweise eine Kompressionskältemaschine, abgeben um das Wärmetransportmittel 4 zu kühlen oder von einem Wärmeerzeuger 27, vorzugsweise einer Kompressionswärmepumpe, aufnehmen, um das Wärmetransportmittel 4 zu erwärmen.

In der Fig. 2 ist ein Temperiersystem 1 für ein Gebäude 2 gezeigt. Im unteren Bereich des Gebäudes 2 befindet sich eine Heizzentrale, in welcher eine Kältemaschine 28 und ein Wärmeerzeuger 27 als erste Wärmeaustauschvorrichtungen 5 zum Temperieren des Wärmetransportmittels 4 angeordnet sind. Das Wärmetransportmittel 4 führende Leitungen, beispielsweise Rohre, führen von der Kältemaschine 28 und einem Wärmeerzeuger 27 zu einem Umschaltventil 23, mit welchem zwischen den Kältemaschine 28 und Wärmeerzeuger 27 geschaltet werden kann. Insbesondere kann das Temperiersystem 1 damit als Heizsystem und als Kühlsystem verwendet werden.

Vom Umschaltventil 23 führen Leitungen zu einer Umwälzpumpe 19, von welcher das Wärmetransportmittel 4 im Umlaufsystem 3 umgewälzt wird und zu den zweiten Wärmeaustauschvorrichtungen 6 transportiert wird.

Insgesamt sind drei zweite Wärmeaustauschvorrichtungen 6 in der Fig. 2 vorgesehen: In einem ersten Raum 21 sind eine Fußbodentemperiervorrichtung 25 und eine Deckentemperiervorrichtung 26 vorgesehen, welche jeweils ein vom Wärmetransportmittel 4 durchflossenes mäanderförmiges Rohrsystem umfassen, welches im Fußboden beziehungsweise in der Decke des ersten Raums 21 angeordnet sind. Das zu temperierende Medium 7 ist hier demnach der Fußboden beziehungsweise die Decke des ersten Raums 21 und in weiterer Folge auch die Luft des ersten Raums 21. In einem zweiten Raum 22 ist ein Heiz-/Kühlkörper 24 vorgesehen, welcher ebenfalls vom Wärmetransportmittel 4 durchströmt wird. Mit dem Heiz-/Kühlkörper 24 wird die Luft des zweiten Raums 22 temperiert.

In der Fig. 1 und der Fig. 2 ist im Umlaufsystem 3 mindestens eine Desinfektionseinheit 8 vorgesehen, wobei die Desinfektionseinheit 8 mindestens zwei Elektroden 16a, 16b aufweist, welche mit dem flüssigen Wärmetransportmittel 4 in Kontakt stehen, und wobei die mindestens zwei Elektroden an eine elektrische Spannungsquelle 9 anschließbar oder angeschlossen sind, sodass ein elektrischer Strom durch das Wärmetransportmittel 4 fließt.

Durch den elektrischen Strom ändert sich das chemische Milieu und Bakterien werden im Umlaufsystem 3 abgetötet. Damit wird die Korrosion an Teilen des Umlaufsystems 3, welche zum Teil von den Bakterien hervorgerufen wird, verringert.

Zum Desinfizieren eines Wärmetransportmittels 4 wird die Umwälzpumpe 18 des Temperiersystems 1 in Betrieb genommen, sodass das Wärmetransportmittel 4 im Umlaufsystem 3 zirkuliert. Außerdem wird eine elektrische Spannung zwischen den mindestens zwei Elektroden 16a, 16b angelegt, sodass ein elektrischer Strom durch das zirkulierende, die Elektroden 16a, 16b umströmende, Wärmetransportmittel 4 fließt.

In der Fig. 1 ist eine Desinfektionseinheit 8 in Strömungsrichtung nach der Umwälzpumpe 18 und vor der zweiten Wärmeaustauschvorrichtung 6 angeordnet. Die Desinfektionseinheit 8 ist an den Pluspol und den Minuspol einer elektrischen Spannungsquelle 9 über elektrische Anschlüsse 20 angeschlossen.

In der Fig. 2 sind zwei mögliche Positionen der Desinfektionseinheit 8 im Umlaufsystem 3 gezeigt. In einer ersten Position ist die Desinfektionseinheit 8 in Strömungsrichtung nach der Umwälzpumpe 18 und vor den zweiten Wärmeaustauschvorrichtungen 6 angeordnet. In einer zweiten Position ist die Desinfektionseinheit 8 zwischen den zweiten Wärmeaustauschvorrichtungen 6 und den ersten Wärmeaustauschvorrichtungen 5 angeordnet. Es ist auch denkbar, dass zwei Desinfektionseinheiten 8 an jeweils der ersten und der zweiten Position vorgesehen sind.

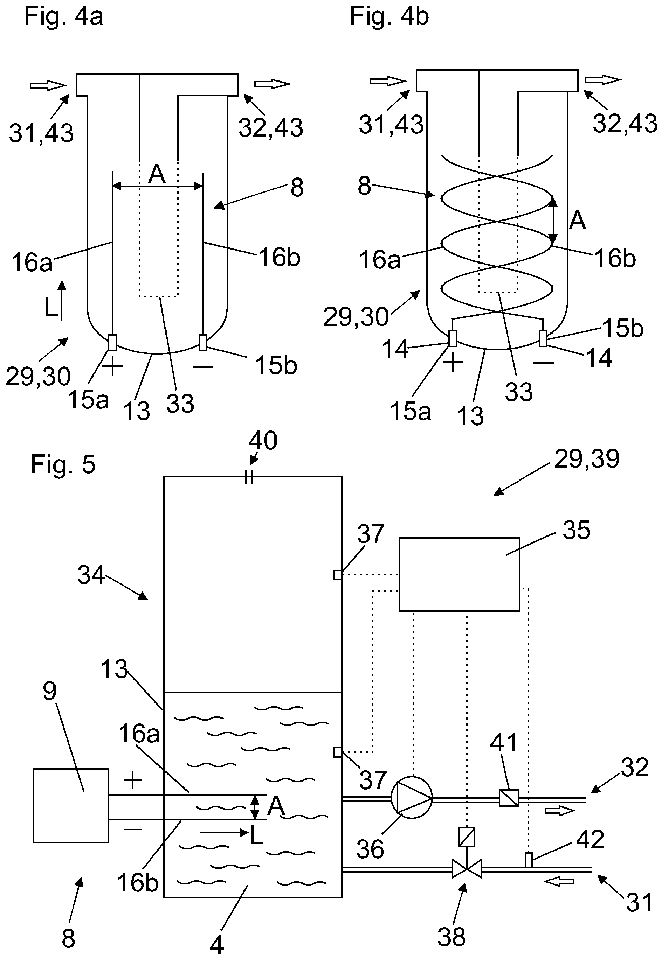

Es kann auch vorgesehen sein, dass im Umlaufsystem 3 eine Zusatzvorrichtung 29 angeordnet ist, wobei das Wärmetransportmittel 4 durch mindestens eine Anschlussöffnung 43 in die und aus der Zusatzvorrichtung 29 strömen kann, wobei die Desinfektionseinheit 8 in der Zusatzvorrichtung 29 angeordnet ist. Spezielle Ausführungsbeispiele einer Zusatzvorrichtung 29 werden in den Figuren 4a, 4b und 5 gezeigt.

Alternativ zum Einsatz des Temperiersystems 1 in einem Gebäude 2, kann das Temperiersystem 1 auch anders eingesetzt werden. Beispielsweise kann mit dem Temperiersystem 1 ein Schwimmbecken beheizt werden, wobei das zu temperierende Medium 7 in diesem Fall das Wasser des Schwimmbeckens ist. Es können aber auch Bauteile einer Maschine durch das Temperiersystem 1 temperiert werden.

Dadurch, dass das Wärmetransportmittel 4 zirkuliert, wird ein bestimmtes Volumen des Wärmetransportmittels 4 mehrere Male an der Desinfektionseinheit 8 vorbeigeführt. Dies erhöht die effektive Wirkzeit der Desinfektionseinheit 8 auf ein bestimmtes Volumen des Wärmetransportmittels 4.

Die elektrische Spannung kann über die elektrische Spannungsquelle 9 manuell und/oder periodisch und/oder aufgrund eines Messwerts des Wärmetransportmittels 4 eines Messgeräts angeschaltet werden. Als Messwert kann hierzu beispielsweise ein Messwert zur Konzentration der Bakterien verwendet werden.

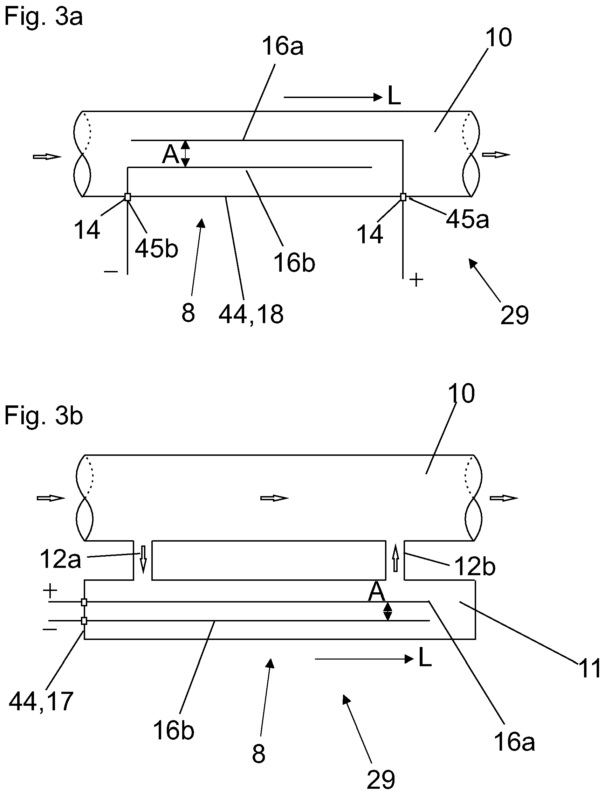

In den Figuren 3a und 3b ist eine Anordnung einer Desinfektionseinheit 8 in einem rohrförmigen Abschnitt des Umlaufsystems 3 gezeigt.

In der Fig. 3a ist die Desinfektionseinheit 8 in einem rohrförmigen Hauptabschnitt 10 des Umlaufsystems 3 angeordnet, bevorzugt wobei die Durchflussmenge des zirkulierenden Wärmetransportmittels 4 durch den Hauptabschnitt 10 gleich der gesamten Durchflussmenge des zirkulierenden Wärmetransportmittels 4 ist. Bei jedem Umlauf umströmt im Wesentlichen die gesamte Umlaufmenge des Wärmetransportmittels 4 die mindestens zwei Elektroden 16a, 16b.

In der Fig. 3b ist die Desinfektionseinheit 8 in einem rohrförmigen Nebenabschnitt 11 des Umlaufsystems 3 angeordnet ist, wobei der Nebenabschnitt 11 mit dem Hauptabschnitt 10 in Verbindung steht, sodass das Wärmetransportmittel 4 vom Hauptabschnitt 10 in den Nebenabschnitt 11 fließen kann. Bei jedem Umlauf des Wärmetransportmittels 4 umströmt ein Teil der gesamten Umlaufmenge des Wärmetransportmittels 4 die mindestens zwei Elektroden 16a, 16b.

Der Nebenabschnitt 11 ist über zwei Verbindungskanäle 12a, 12b mit dem Hauptabschnitt 10 verbunden, wobei ein erster Verbindungskanal 12a zum Einströmen vom Wärmetransportmittel 4 in den Nebenabschnitt 11 dient und ein zweiter Verbindungskanal 12b stromabwärts relativ zum wenigstens einen ersten Verbindungskanal 12a angeordnet ist und zum Ausströmen vom Wärmetransportmittel 4 aus dem Nebenabschnitt 11 dient.

Dabei ist die Durchflussmenge des zirkulierenden Wärmetransportmittels 4 durch den Nebenabschnitt 11 kleiner als die Hälfte der gesamten Durchflussmenge des zirkulierenden Wärmetransportmittels 4. Die Strömung ist im Nebenabschnitt 11 also geringer als im Hauptabschnitt 10. Die zwei Elektroden 16a, 16b weisen, zumindest abschnittsweise, eine gemeinsame Längsrichtung L auf und sind mit einem Abstand A parallel zueinander angeordnet. Die Längsrichtung L verläuft in Richtung der Längsrichtung des rohrförmigen Abschnitts, insbesondere in Strömungsrichtung des Wärmetransportmittels 4.

Die zwei Elektroden 16a, 16b ragen durch eine Wandung 44 des Umlaufsystems 3 von außerhalb des Umlaufsystems 3 in das sich im Umlaufsystem 3 befindliche Wärmetransportmittel 4 jeweils durch eine Öffnung 45a, 45b der Wandung 44. Es kann vorgesehen sein, dass die zwei Elektroden 16a, 16b außerhalb des Umlaufsystems 3 und innerhalb des Umlaufsystems 3 jeweils einteilig ausgebildet sind. Es kann aber auch vorgesehen sein, dass Elektroden 16a, 16b lediglich innerhalb des Umlaufsystems 3 einteilig ausgebildet sind, wobei außerhalb des Umlaufsystems 3 elektrische Anschlüsse 20 aus einem anderen leitenden Material vorgesehen sind.

Die zwei Elektroden 16a, 16b sind durch eine Isolierung 14 von der Wandung 44 elektrisch isoliert. Dies ist nicht notwendig, wenn die Wandung 44 aus einem nicht leitenden Material besteht, beispielsweise aus Kunststoff.

In der Fig. 3a ist eine erste Öffnung 45a für eine erste Elektrode 16a und eine zweite Öffnung 45b für eine zweite Elektrode 16b in einer Mantelseite 18 des Hauptabschnitts 10 des Umlaufsystems 3 angeordnet. Die Elektroden 16a, 16b sind als Stäbe mit einem Knick von im Wesentlichen 90° ausgebildet. Damit treten die Elektroden 16a, 16b entlang einer radialen Richtung des rohrförmigen Hauptabschnitts 10 in das Umlaufsystem 3 ein, verlaufen nach dem Knick aber entlang einer Längsrichtung L, welche parallel zur Strömungsrichtung des Hauptabschnitts verläuft.

Der Begriff "Mantelseite" bezieht sich hier auf die Mantelfläche eines Rohres des Umlaufsystems 3, beispielsweise eines zylindrischen Rohres oder eines Kantrohres.

In der Fig. 3b ist eine erste Öffnung 45a für eine erste Elektrode 16a und eine zweite Öffnung 45b für eine zweite Elektrode 16b in einer Stirnseite 17 des Nebenabschnitts 11 des Umlaufsystems 3 angeordnet. Die Elektroden 16a, 16b sind als im Wesentlichen gerade Stäbe ausgebildet, wobei eine Längsrichtung L der Stäbe in Strömungsrichtung weist. Durch die Anordnung der Elektroden 16a, 16b an der Stirnseite 17 ist dies hier ohne einen Knick in den Elektroden 16a, 16b möglich.

Mit der "Stirnseite" eines rohrförmigen Abschnitts ist eine Seite gemeint, dessen Flächennormale im Wesentlichen in die Richtung des rohrförmigen Abschnitts, also in Strömungsrichtung des Wärmetransportmittels, weist. Eine Stirnseite kann am Ende eines Rohres zustande kommen oder in einem Knick eines Rohres zustande kommen.

In beiden Fällen ist damit der Wirkbereich zwischen den Elektroden 16a, 16b entlang des Rohres ausgedehnt, was eine Vergrößerung des Wirkbereichs auch in einem schmalen Rohr ermöglicht.

Es kann im Umlaufsystem 3 eine Zusatzvorrichtung 29 angeordnet sein, wobei das Wärmetransportmittel 4 durch mindestens eine Anschlussöffnung 43 in die und aus der Zusatzvorrichtung 29 strömen kann, wobei die Desinfektionseinheit 8 in der Zusatzvorrichtung 29 angeordnet ist.

Zusatzvorrichtungen 29 in Heizsystemen können eine Vielzahl von Funktionen im Temperiersystem 1 haben. Mit der Anordnung der Desinfektionseinheit 8 in einer Zusatzvorrichtung 29 hat die Zusatzvorrichtung 29 die weitere Funktion, das Wärmetransportmittel 4 zu desinfizieren.

Beispielhafte Ausführungsbeispiele von Zusatzvorrichtungen 29 sind in den Figuren 4a, 4b und 5 gezeigt. Diese Zusatzvorrichtungen 29 weisen zwei Anschlussöffnungen 43 auf, wobei eine erste Anschlussöffnung 43 als eine Einlassöffnung 31 zum Einströmen des Wärmetransportmittels 4 ausgebildet ist und eine weitere Anschlussöffnung 43 als eine Auslassöffnung 32 zum Ausströmen des Wärmetransportmittels 4 ausgebildet ist. Die Strömungsrichtung ist in den Figuren 4a, 4b und 5 als Pfeile dargestellt.

In den Figuren 4a und 4b ist die Zusatzvorrichtung 29 als Filtereinheit 30 zum Filtern des Wärmetransportmittels 4 ausgebildet. Dabei ist im Strömungsweg des Wärmetransportmittels 4 zwischen der Einlassöffnung 31 und der Auslassöffnung 32 ein, vorzugsweise als Sieb ausgebildeter, Filtereinsatz 33 angeordnet ist.

Der Filtereinsatz 33 ist korbförmig ausgebildet, wobei das Wärmetransportmittel 4 im Einbauzustand der Zusatzvorrichtung 29 im Umlaufsystem 3 vom Äußeren ins Innere des korbförmigen Filtereinsatzes 33 strömt.

In der Fig. 4a sind die zwei Elektroden 16a, 16b als gerade Stäbe ausgebildet, welche in einem Abstand A zueinander aufweisen. Die Elektroden 16a, 16b sind jeweils an einer gegenüberliegenden Seite des Filereinsatzes 33 angeordnet. Ein elektrisches Feld zwischen den Elektroden 16a, 16b verläuft in dieser Anordnung daher durch den Filereinsatz 33.

In der Fig. 4b sind die zwei Elektroden 16a, 16b sind mit einem konstanten Abstand A zueinander als Doppelhelix um den Filtereinsatz 33 angeordnet. Ein elektrisches Feld zwischen der Elektroden 16a, 16b bildet hier einen Zylinder um den Filtereinsatz 33. Bei dieser Konfiguration wird das elektrische Feld von einem Großteil des Wärmetransportmittels 4 durchströmt. Die Desinfektion ist hier daher besonders effektiv.

Die beiden Elektroden 16a, 16b ragen jeweils durch Öffnungen 15a, 15b der Wandung 13 der Filtereinheit 33. Aus den Figuren 4a und 4b ist auch eine elektrische Isolierung 14 ersichtlich, in welcher die elektrischen Anschlüsse 20 für die elektrische Spannungsquelle 9 angeordnet sind. Der Anschluss für den Pluspol ist mit einem Plus gekennzeichnet, der Anschluss für den Minuspol ist mit einem Minus gekennzeichnet.

In der Fig. 5 ist die Zusatzvorrichtung 29 als Ausgleichsystem 39 mit einem unter Atmosphärendruck stehenden Ausgleichbehälter 43 ausgebildet, wobei die Desinfektionseinheit 8 im Ausgleichbehälter 43 angeordnet ist. Mit dem Ausgleichsystem 39 können Druckschwankungen (oder Volumenschwankungen) des Wärmetransportmittels 4 ausgeglichen werden, welche im Betrieb durch eine Änderung der Temperatur der Systemtemperatur des Temperiersystems 1 regelmäßig auftreten. An der Oberseite des Ausgleichbehälters 43 eine Ausgleichöffnung oder ein Ausgleichsventil 40, welche mit der Umgebung in der Verbindung steht, vorgesehen, sodass der Ausgleichbehälter 43 auf Atmosphärendruck ausgeglichen wird.

Vom Umlaufsystem 3 führen eine Zuleitung und eine Ableitung in den Ausgleichbehälter 34, durch welche das Wärmetransportmittel 3 in den Ausgleichbehälter 34 einbringbar beziehungsweise ausbringbar ist.

Durch Öffnen eines steuerbaren Ventils 38 in der Ableitung kann Druck aus dem Umlaufsystem 3 in den Ausgleichbehälter 34 abgelassen werden. Durch eine Druckpumpe 36 in der Zuleitung kann Druck im Umlaufsystem 3 aufgebaut werden. Beide Elemente können dabei von einer Steuereinheit 35 gesteuert werden.

Ein Drucksensor 42 in der Zuleitung kann Über- oder Unterdruck im Umlaufsystem 3 detektieren. Je nach Druck kann das steuerbare Ventil 38 geöffnet und/oder die Druckpumpe 36 angeschaltet werden.

Das Ausgleichssystem 39 kann zudem als Vorrichtung zur Entgasung des Wärmetransportmittels 4 verwendet werden, wie in den Schriften EP 0580881 A1 und EP 0663570 A1 beschrieben wird. Hierbei wird verwendet, dass durch die Verminderung des Drucks des Wärmetransportmittels 4 Gas aus dem Wärmetransportmittel 4 entflieht.

Weiterhin befindet sich in der Ableitung nach der Druckpumpe 36 ein Rückschlagventil 41, welches ein Einströmen des Wärmetransportmittels 4 durch die Ableitung verhindert.

Zudem befinden sich im Ausgleichbehälter 34 zwei Füllstandsensoren 37, welche ebenfalls mit der Steuereinheit 35 verbunden sind und ein Signal an die Steuereinheit 35 weitergeben, wenn ein Maximal- oder Minimalfüllstand des Ausgleichbehälters 34 erreicht wird. Gegebenenfalls kann Wärmetransportmittel 4 dann zugeführt oder abgeführt werden.

Die im Ausgleichsbehälter 34 angeordnete Desinfektionseinheit 8 ist dazu vorgesehen, Bakterien im Ausgleichsbehälter 34 abzutöten. Aus der Ableitung wieder in das Umlaufsystem 3 strömendes, von der Desinfektionseinheit 8 chemisch verändertes Wärmetransportmittel 4 kann auch den Rest des Umlaufsystems 3 desinfizieren.

Die Desinfektionseinheit 8 weist auch in der Fig. 5 zwei Elektroden 16a und 16b auf, welche hier als gerade Stäbe ausgeformt sind und einen Abstand A zueinander aufweisen. Die Elektroden 16a und 16b sind an den Plus- und Minuspol einer elektrischen Spannungsquelle 9 angeschlossen.

Die Elektroden 16a, 16b in den Figuren 3a, 3b, 4a, 4b und 5 weisen einen minimalen und/oder mittleren Abstand A von 0,1 bis 50 Zentimeter, vorzugsweise 1 bis 20 Zentimeter, zueinander auf. Sie können eine Länge von 0,1 bis 200 Zentimeter, vorzugsweise 5 bis 20 Zentimeter, aufweisen, und/oder eine, vorzugsweise aufeinander zugerichtete, Fläche von 0,01 Quadratzentimeter bis 2 Quadratmeter aufweisen.

Die von der elektrischen Spannungsquelle 9 bereitgestellte elektrische Spannung liegt in einem Bereich von 0,01 bis 48 Volt, vorzugsweise 1 bis 24 Volt. Dadurch fließt im Wärmetransportmittel 4 ein elektrischer Strom, wobei die elektrische Stromstärke in einem Bereich von 0,0001 bis 1 Ampere, vorzugsweise in einem Bereich von 0,001 bis 0,1 Ampere, besonders bevorzugt bei rund 0,01 Ampere, liegt.

Dadurch, dass das Wärmetransportmittel 4 im Umlaufsystem 3 immer wiederkehrt, können geringe Stromstärken verwendet werden. Damit kann eine Elektrolyse des Wärmetransportmittels 4 und ein übermäßiger Verschleiß der Elektroden 16a, 16b vermieden werden.

Das Verhältnis der von der elektrischen Spannungsquelle 9 zur Verfügung gestellten elektrischen Spannung zum Abstand A der mindestens zwei Elektroden 16a, 16b beträgt 0,1 bis 10 Volt pro Zentimeter, vorzugsweise 0,5 bis 2 Volt pro Zentimeter.

Versuche des Anmelders haben gezeigt, dass das Verhältnis der von der elektrischen Spannungsquelle 9 zur Verfügung gestellten elektrischen Spannung zum Abstand A der mindestens zwei Elektroden 16a, 16b eine signifikante Größe zur Steuerung der Effizienz der Desinfektionseinheit 8 ist. Insbesondere kann diese Größe vom Konstrukteur kontrolliert werden.

### Bezugszeichenliste

- 1: Temperiersystem
- 2: Gebäude
- 3: Umlaufsystem
- 4: Wärmetransportmittel
- 5: erste Wärmeaustauschvorrichtung
- 6: zweite Wärmeaustauschvorrichtung
- 7: zu temperierendes Medium
- 8: Desinfektionseinheit
- 9: elektrische Spannungsquelle
- 10: Hauptabschnitt
- 11: Nebenabschnitt
- 12a: erster Verbindungskanal
- 12b: zweiter Verbindungskanal
- 13: Wandung der Zusatzvorrichtung
- 14: Isolierung
- 15a: erste Öffnung in der Zusatzvorrichtung
- 15b: zweite Öffnung in der Zusatzvorrichtung
- 16a: erste Elektrode
- 16b: zweite Elektrode
- 17: Stirnseite eines rohrförmigen Abschnitts
- 18: Mantelseite eines rohrförmigen Abschnitts
- 19: Umwälzpumpe
- 20: elektrische Anschlüsse
- 21: erster Raum
- 22: zweiter Raum
- 23: Umschaltventil
- 24: Heiz-/Kühlkörper
- 25: Fußbodentemperiervorrichtung
- 26: Deckentemperiervorrichtung
- 27: Wärmeerzeuger
- 28: Kältemaschine
- 29: Zusatzvorrichtung
- 30: Filtereinheit
- 31: Einlassöffnung
- 32: Auslassöffnung
- 33: Filtereinsatz
- 34: Ausgleichbehälter
- 35: Steuereinheit
- 36: Druckpumpe
- 37: Füllstandsensor
- 38: steuerbares Ventil
- 39: Ausgleichsystem
- 40: Ausgleichöffnung/Ausgleichsventil
- 41: Rückschlagventil
- 42: Drucksensor
- 43: Anschlussöffnung
- 44: Wandung des Umlaufsystems
- 45a: erste Öffnung im Umlaufsystem
- 45b: zweite Öffnung im Umlaufsystem

## Patentansprüche

1. Zusatzvorrichtung (29) für ein Temperiersystem (1) umfassend mindestens eine Anschlussöffnung (43) zum Anschließen der Zusatzvorrichtung (29) an ein ein flüssiges Wärmetransportmittel (4) umwälzendes Umlaufsystem (3) des Temperiersystems (1), sodass das Wärmetransportmittel (4) durch die mindestens eine Anschlussöffnung (43) in die und aus der Zusatzvorrichtung (29) strömen kann, **dadurch gekennzeichnet, dass** in der Zusatzvorrichtung (29) mindestens eine Desinfektionseinheit (8) vorgesehen ist, wobei die Desinfektionseinheit (8) mindestens zwei Elektroden (16a, 16b) aufweist, welche mit dem Wärmetransportmittel (4) in Kontakt bringbar sind, und wobei die mindestens zwei Elektroden (16a, 16b) an eine elektrische Spannungsquelle (9) anschließbar oder angeschlossen sind.

2. Zusatzvorrichtung (29) nach dem vorhergehenden Anspruch, wobei
- die mindestens zwei Elektroden (16a, 16b), zumindest abschnittsweise, eine gemeinsame Längsrichtung (L) aufweisen und mit einem Abstand (A) parallel zueinander angeordnet sind, vorzugsweise wobei die mindestens zwei Elektroden (16a, 16b) als gerade Stäbe ausgebildet sind, und/oder
- die mindestens zwei Elektroden (16a, 16b), zumindest abschnittsweise, jeweils helixförmig ausgebildet sind und zusammen als Doppelhelix mit Abstand (A) voneinander angeordnet sind, und/oder
- mindestens eine Elektrode (16a) gitterförmig ausgebildet ist, vorzugsweise wobei die mindestens eine weitere Elektrode (16b) mit einem Abstand (A) zur mindestens einen Elektrode (16a) angeordnet ist.

3. Zusatzvorrichtung (29) nach einem der vorhergehenden Ansprüche, wobei die mindestens zwei Elektroden (16a, 16b) durch eine Wandung (13) der Zusatzvorrichtung (29) von außerhalb der Zusatzvorrichtung (29) in das sich in der Zusatzvorrichtung (29) befindliche Wärmetransportmittel (4) jeweils durch eine Öffnung (15a, 15b) der Wandung (13) ragen, vorzugsweise wobei die mindestens zwei Elektroden (16a, 16b) durch eine Isolierung (14) von der Wandung (13) elektrisch isoliert sind.

4. Zusatzvorrichtung (29) nach einem der vorhergehenden Ansprüche, wobei mindestens zwei Anschlussöffnungen (43) vorgesehen sind, wobei mindestens eine erste Anschlussöffnung (43) als mindestens eine Einlassöffnung (31) zum Einströmen des Wärmetransportmittels (4) ausgebildet ist und mindestens eine weitere Anschlussöffnung (43) als mindestens eine Auslassöffnung (32) zum Ausströmen des Wärmetransportmittels (4) ausgebildet ist.

5. Zusatzvorrichtung (29) nach dem vorhergehenden Anspruch, wobei die Zusatzvorrichtung (29) als Filtereinheit (30) zum Filtern des Wärmetransportmittels (4) ausgebildet ist, wobei im Strömungsweg des Wärmetransportmittels (4) zwischen der mindestens einen Einlassöffnung (31) und der mindestens einen Auslassöffnung (32) ein, vorzugsweise als Sieb ausgebildeter, Filtereinsatz (33) angeordnet ist.

6. Zusatzvorrichtung (29) nach dem vorhergehenden Anspruch, wobei die mindestens zwei Elektroden (16a, 16b), vorzugsweise mit einem konstanten Abstand (A) zueinander, als Doppelhelix um den Filtereinsatz (33) angeordnet sind, wobei der Filtereinsatz (33) besonders bevorzugt korbförmig ausgebildet ist, wobei das Wärmetransportmittel (4) im Einbauzustand der Zusatzvorrichtung (29) im Umlaufsystem (3) vom Äußeren ins Innere des korbförmigen Filtereinsatzes (33) strömt, oder umgekehrt.

7. Zusatzvorrichtung (29) nach einem der vorhergehenden Ansprüche, wobei die Zusatzvorrichtung (29) als Ausgleichsystem (39) mit einem, vorzugsweise unter Atmosphärendruck stehenden, Ausgleichbehälter (43) ausgebildet ist, wobei die Desinfektionseinheit (8) im Ausgleichbehälter (43) angeordnet ist.

8. Zusatzvorrichtung (29) nach dem vorhergehenden Anspruch, wobei
- das Ausgleichsystem (39) ein schaltbares Ventil (38) aufweist, wobei das schaltbare Ventil (38) von einer Steuereinheit (35) steuerbar ist, sodass durch Schalten des schaltbaren Ventils (38) die Verbindung vom Ausgleichssystem (39) zum Umlaufsystem (3) öffen- und schließbar ist, und/oder
- das Ausgleichsystem (39) eine Druckpumpe (36) aufweist, wobei die Druckpumpe (36) von einer Steuereinheit (35) steuerbar ist, sodass durch die Druckpumpe (36) Druck im Umlaufsystem (3) aufbaubar ist.

9. Temperiersystem (1), insbesondere Niedrigtemperaturheizsystem oder Kühlsystem, zum Beheizen oder Kühlen, umfassend mindestens ein geschlossenes Umlaufsystem (3), wobei sich im Umlaufsystem (3) ein, zumindest teilweise flüssiges, Wärmetransportmittel (4), insbesondere Wasser, befindet, welches im mindestens einen Umlaufsystem (3) mittels Umwälzpumpe (19) zirkuliert, wobei das mindestens eine Umlaufsystem (3) wenigstens eine erste Wärmeaustauschvorrichtung (5) zum Temperieren des Wärmetransportmittels (4) und wenigstens eine zweite Wärmeaustauschvorrichtung (6) zum Temperieren eines zu temperierenden Mediums (7) aufweist, **dadurch gekennzeichnet, dass** im Umlaufsystem (3) mindestens eine Desinfektionseinheit (8) vorgesehen ist, wobei die Desinfektionseinheit (8) mindestens zwei Elektroden (16a, 16b) aufweist, welche mit dem flüssigen Wärmetransportmittel (4) in Kontakt stehen, und wobei die mindestens zwei Elektroden (16a, 16b) an eine elektrische Spannungsquelle (9) anschließbar oder angeschlossen sind, sodass ein elektrischer Strom durch das Wärmetransportmittel (4) fließt.

10. Temperiersystem (1) nach Anspruch 9, wobei im Umlaufsystem (3) eine Zusatzvorrichtung (29), insbesondere nach einem der Ansprüche 1 bis 8, angeordnet ist, wobei das Wärmetransportmittel (4) durch mindestens eine Anschlussöffnung (43) in die und aus der Zusatzvorrichtung (29) strömen kann, wobei die Desinfektionseinheit (8) in der Zusatzvorrichtung (29) angeordnet ist.

11. Temperiersystem (1) nach Anspruch 9 oder 10, wobei die Desinfektionseinheit (8) in einem, vorzugsweise rohrförmigen, Hauptabschnitt (10) des Umlaufsystems (3) angeordnet ist, bevorzugt wobei die Durchflussmenge des zirkulierenden Wärmetransportmittels (4) durch den Hauptabschnitt (10) gleich der gesamten Durchflussmenge des zirkulierenden Wärmetransportmittels (4) ist.

12. Temperiersystem (1) nach einem der Ansprüche 9 bis 11, wobei die Desinfektionseinheit (8) in einem, vorzugsweise rohrförmigen, Nebenabschnitt (11) des Umlaufsystems (3) angeordnet ist, wobei der Nebenabschnitt (11) mit einem, vorzugsweise rohrförmigen, Hauptabschnitt (10) in Verbindung steht, sodass das Wärmetransportmittel (4) vom Hauptabschnitt (10) in den Nebenabschnitt (11) fließen kann, bevorzugt wobei der Nebenabschnitt (11) über wenigstens zwei Verbindungskanäle (12a, 12b) mit dem Hauptabschnitt (10) verbunden ist, wobei wenigstens ein erster Verbindungskanal (12a) zum Einströmen vom Wärmetransportmittel (4) in den Nebenabschnitt (11) dient und wenigstens ein zweiter Verbindungskanal (12b) stromabwärts relativ zum wenigstens einen ersten Verbindungskanal (12a) angeordnet ist und zum Ausströmen vom Wärmetransportmittel (4) aus dem Nebenabschnitt (11) dient, besonders bevorzugt wobei die Durchflussmenge des zirkulierenden Wärmetransportmittels (4) durch den Nebenabschnitt (11) kleiner als die Hälfte der gesamten Durchflussmenge des zirkulierenden Wärmetransportmittels (4) ist.

13. Temperiersystem (1) nach einem der Ansprüche 9 bis 12, wobei
- die mindestens zwei Elektroden (16a, 16b), zumindest abschnittsweise, eine gemeinsame Längsrichtung (L) aufweisen und mit einem Abstand (A) parallel zueinander angeordnet sind, vorzugsweise wobei die mindestens zwei Elektroden (16a, 16b) als gerade Stäbe ausgebildet sind, und/oder
- die mindestens zwei Elektroden (16a, 16b), zumindest abschnittsweise, eine gemeinsame Längsrichtung (L) aufweisen und in einem rohrförmigen Abschnitt angeordnet sind, wobei die Längsrichtung (L) in Richtung der Längsrichtung des rohrförmigen Abschnitts, insbesondere in Strömungsrichtung des Wärmetransportmittels (4), verläuft, und/oder
- die mindestens zwei Elektroden (16a, 16b), zumindest abschnittsweise, jeweils helixförmig ausgebildet sind und zusammen als Doppelhelix mit Abstand (A) voneinander angeordnet sind, und/oder
- mindestens eine Elektrode (16a) gitterförmig ausgebildet ist, vorzugsweise wobei die mindestens eine weitere Elektrode (16b) mit einem Abstand (A) zur mindestens einen Elektrode (16a) angeordnet ist.

14. Temperiersystem (1) nach einem der Ansprüche 9 bis 13, wobei die wenigstens eine erste Wärmeaustauschvorrichtung (5) zum Temperieren des Wärmetransportmittels (4)
- einen Brenner, vorzugsweise zur Verbrennung eines Heizmittels, und/oder
- einen Wärmetauscher
aufweist, und/oder die wenigstens eine zweite Wärmeaustauschvorrichtung (6) zum Temperieren eines zu temperierenden Mediums (7)
- ein, vorzugsweise mäanderförmiges, Rohrsystem, und/oder
- einen Heiz- oder Kühlkörper, und/oder
- einen Wärmetauscher
aufweist.

15. Verfahren zum Desinfizieren eines Wärmetransportmittels (4) in einem Temperiersystem (1) nach einem der Ansprüche 9 bis 14 aufweisend die folgenden Verfahrensschritte:
- es wird die Umwälzpumpe (18) des Temperiersystems (1) in Betrieb genommen, sodass das Wärmetransportmittel (4) im mindestens einen Umlaufsystem (3) zirkuliert,
- es wird eine elektrische Spannung zwischen den mindestens zwei Elektroden (16a, 16b) angelegt, sodass ein elektrischer Strom durch das zirkulierende, die Elektroden (16a, 16b) umströmende, Wärmetransportmittel (4) fließt,
wobei vorzugsweise vorgesehen ist, dass
- bei jedem Umlauf im Wesentlichen die gesamte Umlaufmenge des Wärmetransportmittels (4) die mindestens zwei Elektroden (16a, 16b) umströmt, oder
- bei jedem Umlauf des Wärmetransportmittels ein Teil der gesamten Umlaufmenge des Wärmetransportmittels (4) die mindestens zwei Elektroden (16a, 16b) umströmt.
